# EUROPÄISCHE PATENTSCHRIFT

(11) **EP 2 835 702 B1**
(45) Veröffentlichungstag und Bekanntmachung des Hinweises auf die Patenterteilung: **27.04.2016**
(21) Anmeldenummer: 13179932.2
(22) Anmeldetag: 09.08.2013
(51) Int. Cl.: G05B 19/401, B23Q 17/22

(54) **Verfahren zur Vermessung wenigstens einer Rundachse einer Werkzeugmaschine**
Method for measuring at least one rotation axis of a machine tool
Procédé de mesure d'au moins un axe rotatif d'une machine-outil

(43) Veröffentlichungstag der Anmeldung: 11.02.2015
(73) Patentinhaber: Siemens Aktiengesellschaft, 80333 München (DE)
(72) Erfinder: Haase, Andreas, 09125 Chemnitz (DE); Smolka, Karl-Heinz, 09120 Chemnitz (DE)

(56) Entgegenhaltungen:
- EP-A1- 1 696 289
- EP-A1- 2 050 534
- EP-A1- 2 390 622
- EP-B1- 1 549 459
- DE-A1- 19 501 094
- DE-A1-102006 038 064
- DE-A1-102010 038 783
- US-A1- 2009 183 610
- "Die Software KinematicsOpt: Keine Chance für Drift & Co", KLARTEXT, 30. September 2008 (2008-09-30), Seiten 11-13, XP055093770,

## Beschreibung

Die Erfindung betrifft ein Verfahren zur Vermessung wenigstens einer Rundachse einer Werkzeugmaschine, wobei die Werkzeugmaschine eine Werkzeugaufnahme umfasst, die über wenigstens drei translatorische Achsen im Raum positionierbar und über wenigstens die eine Rundachse relativ zu einem Werkstück orientierbar ist, wobei die Werkzeugaufnahme um eine Spindelachse rotierbar und hinsichtlich eines Drehwinkels einstellbar ist, wobei eine Messvorrichtung in die Werkzeugaufnahme eingespannt ist und wobei eine Kalibrierkugel in eine Werkstückaufnahme der Werkzeugmaschine eingespannt ist.

Bei Werkzeugmaschinen ist es üblich, dass sich ein in einer Werkzeugaufnahme befestigtes Werkzeug entlang dreier Achsen eines kartesischen Koordinatensystems im Raum positionieren lässt. Ferner umfassen Werkzeugmaschinen häufig wenigstens eine Rundachse, mittels derer das Werkzeug gegenüber dem Werkstück orientierbar ist. Vorzugsweise umfasst die Werkzeugmaschine wenigstens zwei Rundachsen, so dass sich das Werkzeug beliebig im Raum gegenüber der Oberfläche des Werkstücks orientieren lässt. Die Koordinierung der Bewegung der Werkzeugaufnahme entlang der drei linearen Achsen sowie die Einstellung des Drehwinkels der Rundachsen erfolgt in einer Steuerung der Werkzeugmaschine mittels einer so genannten Orientierungstransformation. Dabei erfolgt die Berechnung der resultierenden Bewegungen aller Achsen vorzugsweise in Echtzeit.

Um eine Werkzeugmaschine mittels Orientierungstransformation zu betreiben, ist zunächst eine Kalibrierung der Vektorkette der Kinematik der Werkzeugmaschine notwendig. Hierfür ist die Verwendung wenigstens einer in die Werkzeugmaschine eingespannten Kalibrierkugel bekannt, die mittels einer ebenfalls in die Werkzeugmaschine eingespannten Messuhr oder eines Messtasters angetastet wird.

Aus der Druckschrift EP 2050534 A1 ist ein Verfahren zur Vermessung einer Rundachse einer Werkzeugmaschine bekannt, bei der eine Messvorrichtung in eine Werkzeugaufnahme und eine Kalibrierkugel in eine Werkstückaufnahme der Werkzeugmaschine eingespannt sind. Dabei umfasst die Messvorrichtung drei in unterschiedlichen Ebenen angeordnete Messtaster, die derart ausgerichtet sind, dass sich ihre Achsen in einem gemeinsamen Punkt schneiden.

Aus der Druckschrift WO 2004/034164 A1 ist ein Verfahren zur Kalibrierung einer Rundachse einer Werkzeugmaschine bekannt, bei dem mehrere Messtaster in Werkstückaufnahmen sowie eine Kalibrierkugel in eine Werkzeugaufnahme der Werkzeugmaschine eingespannt sind.

Aus der EP 1696289 A1 ist ein Verfahren zum Vermessen einer programmgesteuerten Werkzeugmaschine unter Verwendung einer Messkugel bekannt. Bei diesem Verfahren wird die Messkugel an einem Maschinenteil positioniert und anschließend werden mittels eines einfachen Messtasters eine Vielzahl an Messpunkten gewonnen, aus denen der Mittelpunkt der Messkugel errechnet werden kann.

Aus der DE 19501094 A1 sind ein Verfahren und eine Vorrichtung zur Kalibrierung von Bewegungseinrichtungen bekannt, bei denen unter Verwendung mindestens eines in Bezug auf die Bewegungseinrichtung feststehenden kugelförmigen Referenzkörpers und wenigstens eines an der Bewegungseinrichtung angeordneten Abstandssensors eine Vielzahl an Messpunkten gewonnen werden.

Aus den Entgegenhaltungen EP 2390622 A1 sowie EP 2050534 A1 sind Messvorrichtungen zum Erfassen räumlicher Verlagerungen von Bewegungsachsen einer Werkzeugmaschine bekannt, die einen kugelförmigen Halter und drei jeweils um einen Winkel von 120 Grad zu einander versetzt angeordnete Messtaster aufweisen, mittels derer jeweils der Mittelpunkt der Messkugel bestimmt werden kann.

Aus der Veröffentlichung "Die Software Kinematics Opt: Keine Chance für Drift und Co.", Klartext, 30.09.2008, XP 055093770, sowie aus den Druckschriften DE 102006038064 A1 sowie US 2009/01836160 A1 sind jeweils Messtaster zur jeweiligen Aufnahme einzelner Messpunkte bekannt, bei denen durch die Aufnahme einer Vielzahl an Messpunkten die Mittelpunkte von Messkugeln bestimmbar sind.

Aus der EP 1549459 B1 ist eine Messvorrichtung mit mehreren Abstandssensoren bekannt, mittels derer ebenfalls die Lage des Mittelpunktes einer Messkugel im Raum bestimmbar ist.

Aus der DE 102010038783 A1 ist ein Verfahren zum Erkennen geometrischer Fehler bezüglich zumindest zweier translatorischer Achsen und zumindest einer rotatorischen Achse einer Maschine bekannt, bei denen ein Messtaster zur Aufnahme einer Vielzahl einzelner Messpunkte in Bezug zu einer Messkugel positioniert wird.

Aufgabe der vorliegenden Erfindung ist es, eine Vermessung einer Rundachse einer Werkzeugmaschine mittels einer verhältnismäßig einfach aufgebauten Messvorrichtung zu erreichen.

Diese Aufgabe wird für eine Werkzeugmaschine, die eine Werkzeugaufnahme umfasst, die über wenigstens eine erste translatorische Achse, eine zweite translatorische Achse und eine dritte translatorische Achse relativ zu einem Werkstück im Raum positionierbar und über wenigstens die eine Rundachse relativ zu dem Werkstück orientierbar ist, wobei die Werkzeugaufnahme um eine Spindelachse rotierbar und hinsichtlich eines Drehwinkels einstellbar ist, wobei eine Messvorrichtung mit einem in Richtung der Spindelachse ausgerichteten ersten Messtaster mit flächig ausgebildetem Tastaufnehmer und einem unter einem bestimmten Winkel, vorzugsweise orthogonal, zu der Spindelachse ausgerichteten zweiten Messtaster mit flächig ausgebildetem Tastaufnehmer in die Werkzeugaufnahme eingespannt ist und wobei eine Kalibrierkugel in eine Werkstückaufnahme der Werkzeugmaschine eingespannt ist, durch Ausführen folgender Verfahrensschritte gelöst:
- Einnehmen einer ersten Ausgangsposition durch Einstellung eines bestimmten Drehwinkels der Werkzeugaufnahme, vorzugsweise 0°, und Einstellen eines bestimmten Drehwinkels der Rundachse, vorzugsweise 0°,
- Bewegen der Werkzeugaufnahme in Richtung der Spindelachse und Erfassen eines ersten Messwertes des ersten Messtasters für eine Position, in der sich der erste Messtaster in Kontakt mit der Kalibrierkugel befindet,
- Bewegen der Werkzeugaufnahme in Richtung der ersten translatorischen Achse, vorzugsweise orthogonal zu der Spindelachse, und Erfassen eines ersten Messwertes des zweiten Messtasters für eine Position, in der sich der zweite Messtaster in Kontakt mit der Kalibrierkugel befindet,
- Drehen der Werkzeugaufnahme um 180° um die Spindelachse und Erfassen eines zweiten Messwertes des zweiten Messtasters,
- Ermitteln des Mittelpunktes der Kalibrierkugel auf der ersten translatorischen Achse anhand des ersten Messwertes und des zweiten Messwertes und Positionieren der Werkzeugaufnahme bezüglich der ersten translatorischen Achse auf den Mittelpunkt der Kalibrierkugel,
- Drehen der Werkzeugaufnahme um einen bestimmten Winkel, vorzugsweise 90°, um die Spindelachse und Ausrichten des zweiten Messtasters in Richtung der zweiten translatorischen Achse, wobei in dieser Position ein dritter Messwert des zweiten Messtasters erfasst wird,
- Drehen der Werkzeugaufnahme um 180° um die Spindelachse und Erfassen eines vierten Messwertes des zweiten Messtasters,
- Ermitteln des Mittelpunktes der Kalibrierkugel auf der zweiten translatorischen Achse anhand des dritten Messwertes und des vierten Messwertes und Positionieren der Werkzeugaufnahme bezüglich der zweiten translatorischen Achse auf den Mittelpunkt der Kalibrierkugel,
- Aktivieren einer Orientierungstransformation,
- Einnehmen einer zweiten Ausgangsposition, in der die Spindelachse durch den Mittelpunkt der Kalibrierkugel verläuft und der zweite Messtaster derart ausgerichtet ist, dass eine Symmetrieachse des zweiten Messtasters in einer durch die erste translatorische Achse und die dritte translatorische Achse aufgespannten Ebene liegt und durch den Mittelpunkt der Kalibrierkugel verläuft,
- Umpositionieren der Werkzeugaufnahme um die Rundachse mit aktiver Orientierungstransformation derart, dass sich die Werkzeugaufnahme ideal stets in gleichem Abstand zum Mittelpunkt der Kalibrierkugel befindet und die Spindelachse ideal stets durch den Mittelpunkt der Kalibrierkugel verläuft, und ermitteln wenigstens einer Abweichung von der idealen Position und/oder Orientierung durch Erfassen von Messwerten des ersten und/oder des zweiten Messtasters,
- Einnehmen einer dritten Ausgangsposition, in der die Spindelachse durch den Mittelpunkt der Kalibrierkugel verläuft und der zweite Messtaster derart ausgerichtet ist, dass eine Symmetrieachse des zweiten Messtasters in einer durch die zweite translatorische Achse und die dritte translatorische Achse aufgespannten Ebene liegt und durch den Mittelpunkt der Kalibrierkugel verläuft,
- Umpositionieren der Werkzeugaufnahme um die Rundachse mit aktiver Orientierungstransformation derart, dass sich die Werkzeugaufnahme ideal stets in gleichem Abstand zum Mittelpunkt der Kalibrierkugel befindet und die Spindelachse ideal stets durch den Mittelpunkt der Kalibrierkugel verläuft, und ermitteln wenigstens einer Abweichung von der idealen Position und/oder Orientierung durch Erfassen von Messwerten des ersten und/oder des zweiten Messtasters.

Die Erfindung bietet den Vorteil, dass gegenüber bekannten Verfahren eine verhältnismäßig einfach aufgebaute Messvorrichtung mit lediglich zwei linearen Messtastern verwendet werden kann.

Gemäß der Erfindung erfolgt die Ermittlung der Abweichungen von den idealen Sollpositionen während der Drehung der Werkzeugaufnahme um die Rundachse für eine Vielzahl an Winkeln, so dass Korrekturwerte bzgl. der Orientierungstransformation unter Einbeziehung der ermittelten Abweichungen ebenfalls für einen möglichst lückenlosen Winkelbereich ermittelt werden können.

Vorteilhaft wird nach dem ersten und/oder dem zweiten Verfahren der Werkzeugaufnahme wenigstens eine Kontrollmessung durchgeführt, indem die zuvor durchgeführten Verfahrensschritte ausgehend von einer korrigierten Ausgangsposition wiederholt werden, und in Abhängigkeit des Ergebnisses der Kontrollmessung die Werkzeugaufnahme ggf. nachpositioniert wird. Dadurch kann die Kalibrierung der Werkzeugmaschine weiter verbessert werden.

Vorteilhaft wird ferner nach dem Positionieren der Werkzeugaufnahme bezüglich der ersten translatorischen Achse (x-Achse) und/oder der zweiten translatorischen Achse (y-Achse) die Werkzeugaufnahme um wenigstens 360° um die Spindelachse gedreht und ein Rundlauffehler ermittelt. Der so gewonnene Rundlauffehler ist eine aussagekräftige Größe in Bezug auf die Genauigkeit der betreffenden Werkzeugmaschine.

Bei einer besonders bevorzugten Ausführungsform der Erfindung wird der ermittelte Rundlauffehler, der sich aus dem Rundlauffehler der Spindel und dem Rundlauffehler der Messvorrichtung zusammensetzt, mittels einer Steuerung der Werkzeugmaschine bzw. einer Steuerung der Messvorrichtung ausgeglichen. Dies verbessert die mit der Messvorrichtung erreichbare Messgenauigkeit.

Vorteilhaft werden während der Drehung der Werkzeugaufnahme um die Rundachse die von dem ersten und/oder dem zweiten Messtaster erfassten Messwerte automatisch überwacht, insbesondere auf Einhaltung eines bestimmten Toleranzbandes, wobei insbesondere bei Überschreiten eines Maximalwertes die Drehung der Werkzeugaufnahme bzw. die Vermessung der Rundachse gestoppt wird. Dies trägt zur Sicherheit beim Betrieb und insbesondere zum Schutz vor einer Beschädigung der Werkzeugmaschine bei.

Ein weiterer Vorteil ergibt sich, wenn die Grenzen des Toleranzbandes und/oder der Maximalwert einstellbar sind. Dadurch kann der Bediener genau festlegen, welche Abweichungen vom idealen Verhalten noch als sicherer Betrieb der Werkzeugmaschine während der Vermessung angesehen werden.

Vorteilhaft ist darüber hinaus in einem Messprogramm zur Durchführung des erfindungsgemäßen Verfahrens eine MaschinenKinematik voreinstellbar. Dadurch kann das erfindungsgemäße Verfahren zur Vermessung einer Rundachse in Bezug auf die betreffende Werkzeugmaschine voreingestellt werden.

Der Ablauf des erfindungsgemäßen Verfahrens wird vorteilhaft durch eine übliche Werkzeugmaschinensteuerung, insbesondere mittels einer entsprechend angepassten Software, gesteuert. Die Messtaster der Messvorrichtung sind vorteilhaft zunächst mit einer Messelektronik verbunden, die die von den Messtastern gelieferten Signale vorverarbeitet. Die Ausgangssignale der Messelektronik werden entweder an eine Datenverarbeitungseinrichtung, z.B. einen PC, oder besonders vorteilhaft direkt an die Werkzeugmaschinensteuerung weitergeleitet. Bei Zwischenschaltung einer Datenverarbeitungseinrichtung zwischen der Messelektronik und der Werkzeugmaschinensteuerung übernimmt vorteilhaft die Datenverarbeitungseinrichtung mittels einer entsprechenden Software die Steuerung und Überwachung des gesamten Ablaufs und gibt hierzu entsprechende Steuerbefehle an die Werkzeugmaschinensteuerung ab.

Durch das erfindungsgemäße Verfahren kann in einfacher Weise eine Rundachse einer Werkzeugmaschine vermessen werden. Selbstverständlich ist die aufgezeigte Vorgehensweise analog auch auf Werkzeugmaschinen mit mehr als einer Rundachse übertragbar. Es lassen sich somit auch mehrere, insbesondere alle Rundachsen einer betreffenden Werkzeugmaschine vermessen.

Die Erfindung wird nachfolgend anhand der Zeichnung an einem Ausführungsbeispiel näher erläutert. Es zeigen:
- FIG 1: die in Bezug auf die Erfindung relevanten Teile einer Werkzeugmaschine mit einer Kopfkinematik in stark vereinfachter, schematischer Darstellung,
- FIG 2: die in Bezug auf die Erfindung relevanten Teile einer Werkzeugmaschine mit einer Tischkinematik in stark vereinfachter, schematischer Darstellung,
- FIG 3: wesentliche Teile eines Messaufbaus zur Durchführung eines erfindungsgemäßen Verfahrens im Blockschaltbild,
- FIG 4: die Ermittlung eines Messwertes mittels eines ersten Messtasters,
- FIG 5: die Ermittlung eines Messwertes mittels eines zweiten Messtasters,
- FIG 6: die Ermittlung eines weiteren Messwertes mittels des zweiten Messtasters,
- FIG 7: die Ausrichtung der Spindelachse relativ zu der Kalibrierkugel,
- FIG 8: die Situation bei einer um einen bestimmten Winkel um eine zu vermessende Rundachse gedrehten Werkzeugaufnahme,
- FIG 9: die Situation bei einer um einen bestimmten Winkel um eine zu vermessende Rundachse gedrehten Werkzeugaufnahme bei um 90° gedrehter Messvorrichtung,
- FIG 10: eine Messvorrichtung mit zwei in einem Winkel von 45° versetzt zueinander angeordneten Messtastern, und
- FIG 11: ein Ablaufdiagramm mit wesentlichen Schritten zur Durchführung eines erfindungsgemäßen Verfahrens.

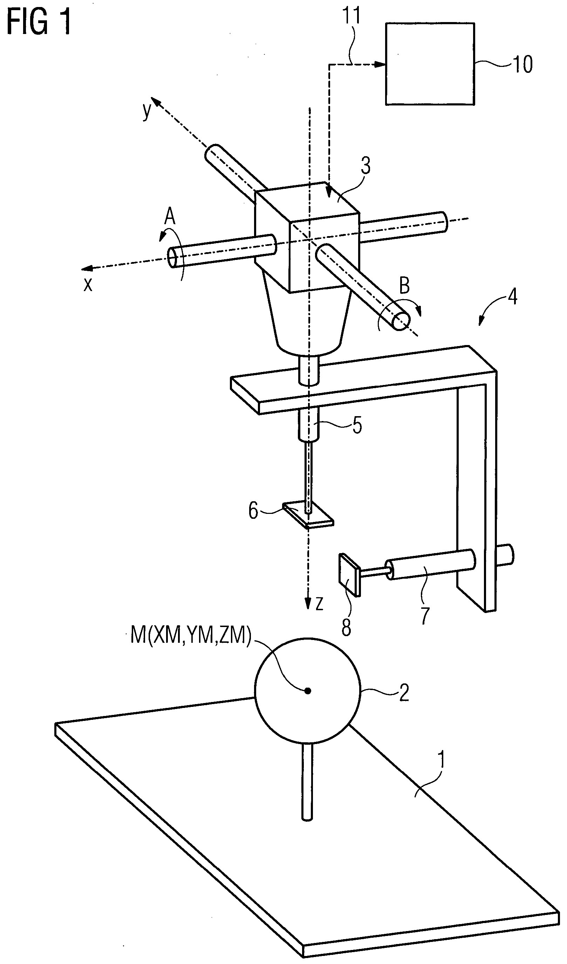

Figur 1 zeigt die in Bezug auf die Erfindung relevanten Teile einer Werkzeugmaschine mit einer 5-Achs-Kinematik in stark vereinfachter, schematischer Darstellung. An einer Werkstückaufnahme in Form eines Werkzeugtisches 1 der Werkzeugmaschine ist eine Kalibrierkugel 2 befestigt. Zur Befestigung weist der Werkzeugtisch entsprechende Werkstückhalter (nicht dargestellt) auf. Weiterhin ist in eine Werkzeugaufnahme 3 der Werkzeugmaschine eine Messvorrichtung 4 eingespannt. Die Werkzeugaufnahme 3 lässt sich mittels entsprechender Achsantriebe entlang der translatorischen (linearen) Achsen x, y und z im Raum und damit relativ zum Werkzeugtisch 1 positionieren. Vorteilhaft bilden die linearen Achsen x, y und z im Ausführungsbeispiel ein kartesisches Koordinatensystem. Prinzipiell wäre jedoch auch eine andere Geometrie denkbar. Weiterhin lässt sich die Werkzeugaufnahme 3 mittels der beiden rotatorischen Achsen A und B relativ zu dem Werkzeugtisch 1 und damit relativ zu einem an dem Werkzeugtisch befestigten Werkstück bzw. relativ zu der an dem Werkzeugtisch befestigten Kalibrierkugel 2 im Raum orientieren. Die Achsbewegungen werden mittels einer Steuerung 10 in Verbindung mit entsprechenden Achsantrieben (nicht dargestellt) gesteuert. Die Verbindung zwischen der Steuerung 10 und den Achsantrieben ist in der Figur durch die Steuerleitung 11 symbolisiert. Es sei an dieser Stelle angemerkt, dass die Erfindung nicht auf die gezeigte Kinematik einer Werkzeugmaschine (hier: 5-Achs-Kinematik) beschränkt ist, sondern auch andere Bauformen, z.B. mit lediglich vier Achsen, oder auch mehr als fünf Achsen, in Betracht kommen. Darüber hinaus kommen auch Kinematiken in Betracht, bei denen zur Erzeugung der Relativbewegung zwischen der Werkzeugaufnahme und dem Werkzeug der Werkzeugtisch umpositioniert, insbesondere um wenigstens eine Rundachse gedreht wird.

Die Messvorrichtung 4 gemäß dem Ausführungsbeispiel umfasst die beiden linearen Messtaster 5 und 7, die einen Winkel von 90° einschließen. Dabei weist der Messtaster 5 den flächig ausgebildeten Tastaufnehmer 6 und der Messtaster 7 den ebenfalls flächig ausgebildeten Tastaufnehmer 8 auf. Die Messvorrichtung 4 ist in Bezug auf die Kalibrierkugel 2 so dimensioniert, dass beide Tastaufnehmer 6 und 8 gleichzeitig mit der Kalibrierkugel 2 in Kontakt gebracht werden können, derart, dass die Symmetrieachsen der Messtaster 5 bzw. 7 zumindest näherungsweise durch den Mittelpunkt M (XM, YM, ZM) der Kalibrierkugel 2 verlaufen und beide Messtaster 5 und 7 in dieser Position Messwerte liefern können.

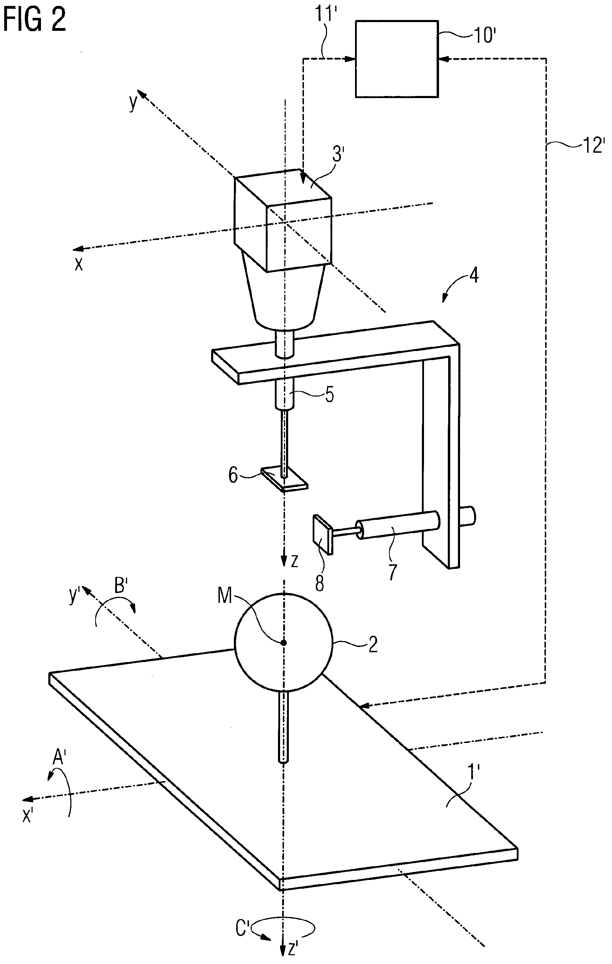

Figur 2 zeigt im Unterschied zu Figur 1 in stark vereinfachter, schematischer Darstellung eine Werkzeugmaschine mit einer sogenannten Tischkinematik. Dabei ist in der Figur ebenfalls auf einem Werkzeugtisch 1' der Werkzeugmaschine eine Kalibrierkugel 2 befestigt. Weiterhin ist in eine Werkzeugaufnahme 3' der Werkzeugmaschine eine Messvorrichtung 4 eingespannt. Die Werkzeugaufnahme 3' lässt sich mittels entsprechender Achsantriebe entlang der translatorischen (linearen) Achsen x, y und z im Raum und damit relativ zum Werkzeugtisch 1' positionieren. Vorteilhaft bilden die linearen Achsen x, y und z im Ausführungsbeispiel ein kartesisches Koordinatensystem. Prinzipiell wäre jedoch auch eine andere Geometrie denkbar. Weiterhin lässt sich im Ausführungsbeispiel gemäß Figur 2 der Werkzeugtisch 1' mittels der drei rotatorischen Achsen A, B und C relativ zu der Werkzeugaufnahme 3' im Raum orientieren. Die Achsbewegungen werden mittels einer Steuerung 10' in Verbindung mit entsprechenden Achsantrieben (nicht dargestellt) gesteuert. Die Verbindung zwischen der Steuerung 10' und den Achsantrieben ist in der Figur durch die Steuerleitungen 11' und 12' symbolisiert.

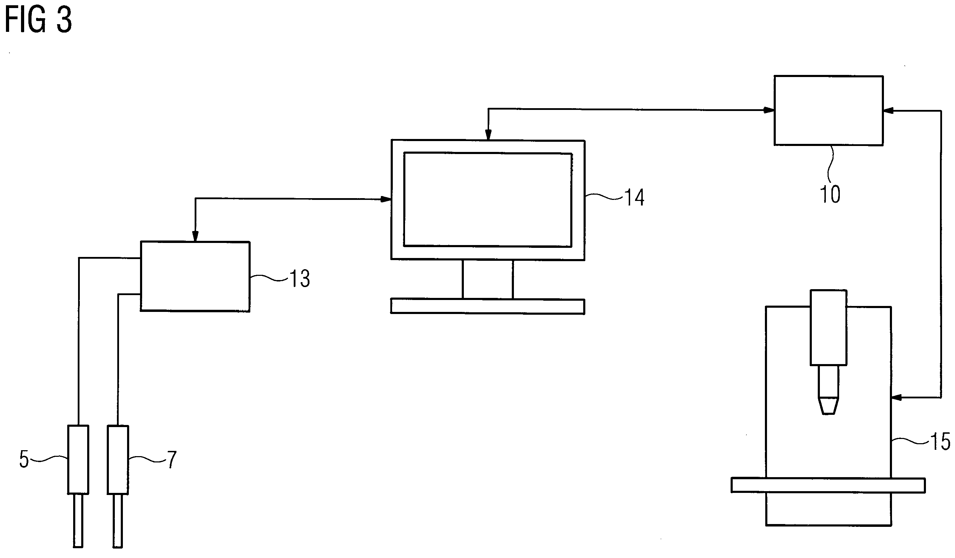

Die wesentlichen Teile eines Messsystems sowie einer Werkzeugmaschine zur Durchführung eines erfindungsgemäßen Verfahrens zeigt Figur 3. Das Messsystem umfasst die beiden Messtaster 5 und 7, die Messwerte erzeugen und an eine Messelektronik 13 weiterleiten. Die Messelektronik 13 steht in Verbindung mit einer Datenverarbeitungseinrichtung, vorzugsweise einem PC 14 mit einer entsprechenden Messsoftware, in der die von der Messelektronik 13 gelieferten Daten weiterverarbeitet werden. Weiterhin steht die Datenverarbeitungseinrichtung in Verbindung mit der numerischen Steuerung 10 zur Steuerung der Werkzeugmaschine 15. Die Steuerung 10 sorgt für die bei der Ausübung des erfindungsgemäßen Verfahrens in den einzelnen Verfahrensschritten jeweils benötigten Achs-Positionen bzw. - Orientierungen der Achsen der Werkzeugmaschine 15.

Alle nachfolgenden Ausführungen am Beispiel einer Werkzeugmaschine mit einer Kopfkinematik lassen sich analog auch auf andere Werkzeugmaschinen mit wenigstens einer zu vermessenden Rundachse übertragen, zum Beispiel auf Werkzeugmaschinen mit einer Tischkinematik gemäß Figur 2.

Im Ausführungsbeispiel gemäß Figur 1 dreht die erste Rundachse A um die x-Achse und die zweite Rundachse B um die y-Achse. Ferner ist die Werkzeugaufnahme 3 um die Spindelachse rotierbar und insbesondere auch der Drehwinkel einstellbar.

Der erste Messtaster 5 ist entlang der z-Achse, die mit der Spindelachse zusammenfällt und auch eine Symmetrieachse der Werkzeugaufnahme 3 sowie des Messtasters 5 darstellt, ausgerichtet, und der Messtaster 7 ist parallel zur x-Achse ausgerichtet und liegt in einer durch die x- und z-Achsen aufgespannten Ebene.

Die Werkzeugaufnahme 3 mit dem daran befestigten Messsystem 4 muss zu Beginn des Verfahrens schon mit einer gewissen Fehlertoleranz relativ zu der Kalibrierkugel vorpositioniert sein, z.B. mit einer Fehlertoleranz kleiner 1 mm. Da einer betreffenden Werkzeugmaschinensteuerung 10 die Geometriedaten der damit gesteuerten Werkzeugmaschine, der Messvorrichtung 4 und der auf dem Werkzeugtisch 1 befestigten Kalibrierkugel 2 bekannt sind, ist diese Voreinstellung (Vorpositionierung) in einfacher Weise möglich. Durch die Verwendung flächig ausgebildeter Tastaufnehmer 6 und 7 kann eine geringe Positionierungenauigkeit bei der Kalibrierung vernachlässigt werden.

Gemäß einem ersten Verfahrensschritt des erfindungsgemäßen Verfahrens wird die Werkzeugaufnahme 3 mit dem darin eingespannten Messsystem 4 zunächst in eine erste Ausgangsposition gebracht, in der die in Figur 1 gezeigte Ausrichtung der linearen Messtaster 5 und 7 erfolgt und die beiden Rundachsen A und B jeweils den Drehwinkel "0°" einnehmen. Weiterhin ist die Werkzeugaufnahme 3 in der in Figur 1 gezeigten Ausgangsposition bereits derart vorpositioniert, dass die dritte translatorische Achse (z-Achse) durch die Kalibrierkugel 2 verläuft. Es liegt jedoch in dieser Ausgangsposition noch keiner der beiden Messtaster 5 bzw. 7 an der Kalibrierkugel 2 an.

In einem nachfolgenden Verfahrensschritt wird die Werkzeugaufnahme 3 entlang der z-Achse auf die Kalibrierkugel 2 zubewegt, bis der erste Messtaster 5, insbesondere der flächig ausgebildete Tastaufnehmer 6, die Kalibrierkugel gerade berührt und er somit erstmalig einen Messwert liefert. Durch den flächig ausgebildeten Tastaufnehmer 6 in Verbindung mit der Vorpositionierung der Werkzeugaufnahme 3 trifft der Tastaufnehmer 6 die Kalibrierkugel 2 vorteilhaft auf deren Nordpol. Bei einer ersten Variante der Erfindung wird nach der ersten Berührung die Bewegung der Werkzeugaufnahme in z-Richtung sofort gestoppt und der von dem Messtaster 5 gelieferte Messwert als erster Messwert erfasst und gespeichert. Es ist jedoch gemäß einer anderen Variante auch möglich, dass die Werkzeugaufnahme 3 nach der ersten Berührung des Messtasters 5 mit der Kalibrierkugel 2 noch um einen bestimmten Betrag (z.B. 0,5 mm) weiter entlang der z-Achse verfahren wird und der erste Messwert des ersten Messtasters 5 bei einer Position erfasst und gespeichert wird, bei der der erste Messtaster 5 weiter ausgelenkt ist als bei der ersten Berührung. Besonders vorteilhaft wird die Werkzeugaufnahme 3 nach der ersten Berührung des Messtasters 5 mit der Kalibrierkugel 2 noch so weit in z-Richtung verfahren, bis eine Symmetrieachse S des zweiten Messtasters 7 die gleiche Position auf der z-Achse einnimmt wie der Mittelpunkt M der Kalibrierkugel 2. Der zweite Messtaster 7 liegt somit in einer durch den Äquator der Kalibrierkugel 2 aufgespannten Ebene.

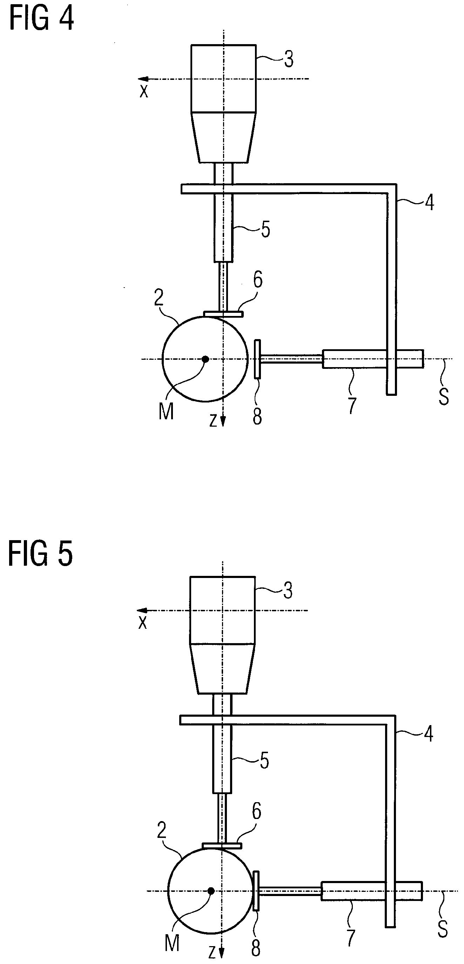

In Figur 4 ist die Situation veranschaulicht, in der sich bei einer Werkzeugmaschine gemäß Figur 1 der Tastaufnehmer 6 gerade in Kontakt mit (dem Nordpol) der Kalibrierkugel 2 befindet und der erste Messtaster 5 somit einen Messwert liefert, während der zweite Messtaster 7 die Kalibrierkugel 2 noch nicht berührt und dieser somit noch keinen Messwert liefert. Anschließend wird die Werkzeugaufnahme vorzugsweise noch so weit in z-Richtung verfahren, bis die Symmetrieachse S des zweiten Messtasters 7 die gleiche Position auf der z-Achse einnimmt, wie der Mittelpunkt M der Kalibrierkugel 2. Die dafür zurückzulegende Strecke kann in einfacher Weise aus den bekannten geometrischen Daten der Messvorrichtung 4 und dem bekannten Radius der Kalibrierkugel 2 bestimmt werden.

Im nächsten Verfahrensschritt wird die Werkzeugaufnahme 3 orthogonal zu der Spindelachse, im Ausführungsbeispiel vorteilhaft entlang der x-Achse, so weit bewegt, bis auch der Tastaufnehmer 8 des Messtasters 7 die Kalibrierkugel 2 gerade berührt und somit auch der Messtaster 7 einen Messwert liefert. Vorzugsweise wird die Werkzeugaufnahme 3 anschließend noch um einen bestimmten Betrag, z.B. 0,5 mm, weiter in Richtung der x-Achse verfahren und der so gelieferte Messwert als erster Messwert des Messtasters 7 erfasst und gespeichert. Diese Situation, in der sich beide Messtaster in Kontakt mit der Kalibrierkugel befinden, ist in Figur 5 veranschaulicht.

Es sei an dieser Stelle angemerkt, dass bei der Ausführung des erfindungsgemäßen Verfahrens auch von der im Ausführungsbeispiel aufgezeigten Reihenfolge abgewichen werden kann. So ist es beispielsweise möglich, dass die Werkzeugaufnahme bei der Annäherung an die Kalibrierkugel gleichzeitig in z-Richtung und in x-Richtung verfahren wird und die Messvorrichtung so unter einem Winkel von 45° auf die Kalibrierkugel 2 zubewegt wird. Dies erlaubt vorteilhaft eine kleinere Ausbildung der Tastaufnehmer 6 und 8.

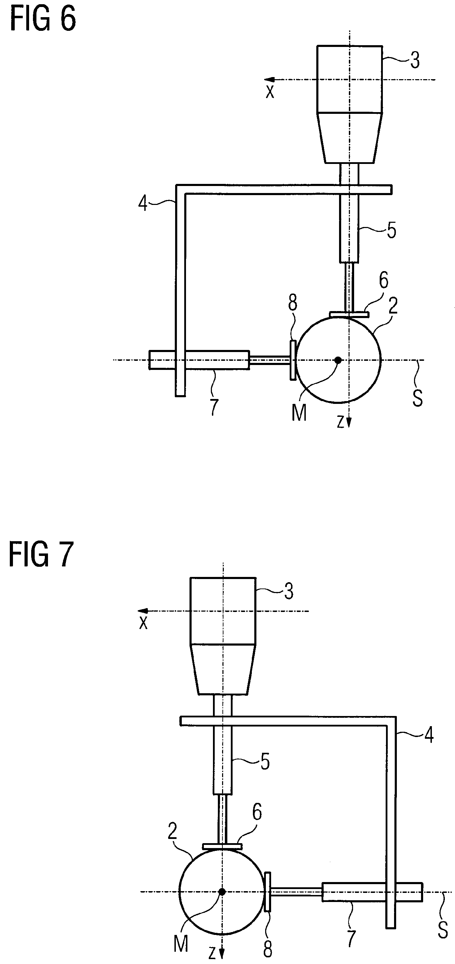

Im nächsten Verfahrensschritt wird die Werkzeugaufnahme 3 dann unter Beibehaltung des von dem ersten Messtaster 5 zuletzt gelieferten Messwerts um 180° um die Spindelachse rotiert. Die Endposition hierzu ist in Figur 6 veranschaulicht. In dieser Position wird ein zweiter Messwert des zweiten Messtasters 7 erfasst.

Im nächsten Verfahrensschritt wird nun die Werkzeugaufnahme 23 um die Hälfte der Differenz zwischen dem ersten und dem zweiten von dem Messtaster 7 gelieferten Messwert entlang der x-Achse verfahren, derart, dass zum Abschluss der Verfahrbewegung der Mittelpunkt M der Kalibrierkugel 2 den gleichen Wert XM auf der x-Achse einnimmt wie die Spindelachse. Diesen Zustand zeigt Figur 7.

Bei einer Ausführungsform des erfindungsgemäßen Verfahrens wird nun zur Kontrolle die Spindel zurückpositioniert (0°-Position) und der Kalibriervorgang bezüglich der x-Achse wiederholt bzw. kontrolliert. Dies trägt zu einer weiteren Erhöhung der Genauigkeit bei der Kalibrierung bei. Gegebenenfalls kann der Vorgang auch mehrfach wiederholt werden.

Analog zur Kalibrierung der Spindelachse bezüglich der x-Achse erfolgt anschließend die Kalibrierung der Spindelachse in Bezug auf die y-Achse. Hierzu wird die Spindelachse gegenüber der 0°-Position um 90° gedreht, so dass der Messtaster 7 nun parallel zur y-Achse ausgerichtet ist. Anschließend wird die Werkzeugaufnahme 3 so lange in y-Richtung bewegt, bis der Tastaufnehmer 8 des Messtasters 7 die Kalibrierkugel 2 gerade berührt und einen Messwert liefert. Bei einer bevorzugten Ausführungsform wird die Werkzeugaufnahme 3 anschließend um einen bestimmten Betrag (z.B. 0,5 mm) weiter in y-Richtung verfahren und ein dritter Messwert des Messtasters 7 für diese Position erfasst. Nun erfolgt erneut eine Drehung der Werkzeugaufnahme 3 um 180° um die Spindelachse und die Erfassung eines vierten Messwertes des Messtasters 7. Im Anschluss daran wird die Werkzeugaufnahme 3 um die Hälfte der Differenz zwischen dem dritten und dem vierten Messwert des Messtasters 7 entlang der y-Achse verfahren, derart, dass nun die Spindelachse auch bezüglich der y-Achse die gleiche Position einnimmt wie der Mittelpunkt M der Kalibrierkugel 2. Die Werkzeugaufnahme ist damit bezüglich der x-y-Ebene kalibriert.

Auch bezüglich der Positionierung der Werkzeugaufnahme 3 in Bezug auf die y-Achse kann bei einer bevorzugten Ausführungsform der Erfindung wenigstens eine Kontrollmessung bzw. Wiederholung durchgeführt werden, indem die Spindelachse um 180° zurückgeschwenkt wird.

Da die Spindelachse nach der Kalibrierung im Idealfall exakt durch den Mittelpunkt M der Kalibrierkugel 2 verläuft, kann ferner der Rundlauffehler der Spindelachse in der x-y-Ebene bestimmt werden. Hierzu wird die Messvorrichtung 4 um 360° um die Spindelachse rotiert und die von dem Messtaster 7 gelieferten Messwerte in Abhängigkeit des Drehwinkels erfasst. Vorteilhaft wird der so ermittelte Rundlauffehler in der Steuerung gespeichert. Der Rundlauffehler kann als Gütekriterium für die Kalibrierung dienen.

Bei einer bevorzugten Ausführungsform der Erfindung werden die während der Kalibrierung von den Messtastern 5 und 7 gelieferten Messwerte automatisch auf ein programmierbares Toleranzband überwacht. Bei Überschreitung dieser Toleranzwerte werden die Positionsbewegungen der Achsen sofort gestoppt und damit die Messvorrichtung vor Kollisionen geschützt.

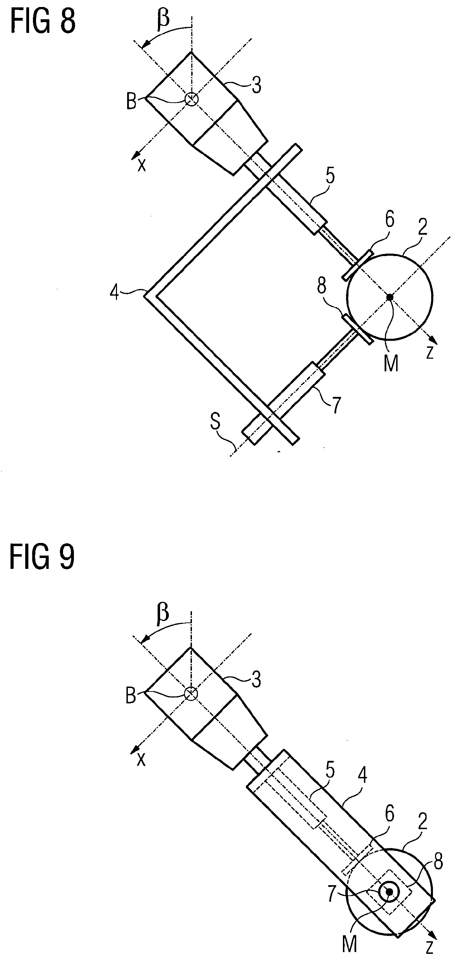

Als nächster Verfahrensschritt des erfindungsgemäßen Verfahrens wird nun die Orientierungstransformation der numerischen Steuerung der Werkzeugmaschine aktiviert. Anschließend wird dann zum Vermessen einer Rundachse, z.B. der mit der y-Achse zusammenfallenden Rundachse B, die Werkzeugaufnahme 3 ausgehend von einer Ausgangsposition um einen bestimmten Winkelbereich um die Rundachse geschwenkt, derart, dass sich die Werkzeugaufnahme 3 ideal stets in gleichem Abstand zum Mittelpunkt M der Kalibrierkugel 2 befindet und die Spindelachse z ideal ebenfalls stets durch den Mittelpunkt M der Kalibrierkugel 2 verläuft. Während der Drehung der Werkzeugaufnahme 3 um die zu vermessende Rundachse werden durch die beiden Messtaster 5 und 7 die Abweichungen von der jeweiligen idealen Position in Abhängigkeit des Drehwinkels β erfasst. In Figur 8 ist die Situation veranschaulicht, in der die Rundachse B um einen Winkel β von ca 45° gegenüber ihrer Ausgangsposition während der Kalibrierung (0°) geschwenkt ist.

Um die Abweichungen für alle drei translatorischen Achsen ermitteln zu können wird die Messvorrichtung um einen bestimmten Winkel gedreht und der Messvorgang wiederholt. So ist bei der im Ausführungsbeispiel gezeigten Maschinenkinematik beispielsweise beim erstmaligen Drehen der Werkzeugaufnahme 3 um einen bestimmten Winkelbereich um die zu vermessende Rundachse B der zweite Messtaster 7 parallel zur ersten translatorischen Achse (x-Achse) ausgereichtet (siehe Figur 8) und beim zweiten Drehen der Werkzeugaufnahme 3 um den bestimmten Winkelbereich um die zu vermessende Rundachse B der zweite Messtaster 7 parallel zur zweiten translatorischen Achse (y-Achse) ausgereichtet (siehe Figur 9). So ist es möglich, dass beim Vermessen der Rundachse B die winkelabhängigen Abweichungen in allen drei Achsrichtungen bestimmt werden können, obwohl die Messvorrichtung nur zwei Messtaster aufweist.

Aus den so ermittelten Abweichungen werden anschließend vorteilhaft Korrekturwerte bezüglich der Orientierungstransformation ermittelt. Die so ermittelten Korrekturwerte der Orientierungstransformation werden bei der anschließenden Bearbeitung eines Werkstücks mit der Werkzeugmaschine von der Steuerung der Werkzeugmaschine und insbesondere bei der Orientierungstransformation berücksichtigt. Dadurch wird die mit der betreffenden Werkzeugmaschine erreichbare Genauigkeit bei der Bearbeitung eines Werkstücks wesentlich erhöht.

Das Umpositionieren der Rundachsen und die Korrektur der Orientierungstransformation sind abhängig von der Art der Maschinenkinematik. Vorteilhaft kann die Art der Maschinenkinematik in einem entsprechenden Messprogramm voreingestellt werden. Im Ausführungsbeispiel gemäß den Figuren 1 und 3 ff ist eine Kopfkinematik dargestellt, bei der die erste Rundachse A um die x-Achse und die zweite Rundachse B um die y-Achse dreht. Im Ausführungsbeispiel wurden die Korrekturwerte bei der Orientierungstransformation dadurch ermittelt, indem die Werkzeugaufnahme 3 schrittweise um einen bestimmten Schwenkbereich um die Rundachse B orientiert wurde und durch die beiden Messtaster 5 und 7 zu jedem Schritt die Istwerte in x- und z-Richtung bzw. y- und z-Richtung erfasst und gespeichert wurden. Analog können auch Korrekturwerte für die Orientierungstransformation bezüglich der ersten Rundachse A bzw. der dritten Rundachse C gewonnen werden.

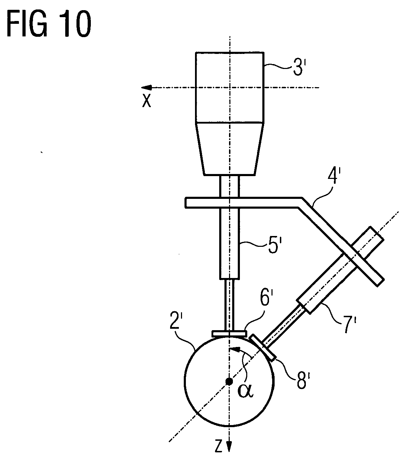

Bei den Ausführungsbeispielen der Erfindung gemäß den Figuren 1 bis 8 sind die beiden Messtaster 5 und 7 der Messvorrichtung 4 stets unter einem Winkel von 90° versetzt zueinander (orthogonal) ausgerichtet. Dies ist zwar die bevorzugte Ausführungsform, jedoch keine zwingend notwendige Voraussetzung zur Durchführung eines erfindungsgemäßen Verfahrens. Beispielsweise zeigt Figur 10 eine in eine Werkzeugaufnahme 3 einer Werkzeugmaschine eingespannte Messvorrichtung 4', bei der die beiden Messtaster 5' und 7' unter einem Winkel α von 45° zueinander angeordnet sind. Analog zu den vorherigen Ausführungsbeispielen ist dabei der Messtaster 5' in Richtung der Spindelachse (z-Achse) ausgerichtet. Aus den von dem Messtaster 7' erzeugten Messwerten werden dann durch einfache geometrische Rechenoperationen die gesuchten Positionen bezüglich der x- bzw. y-Achse ermittelt. Bevorzugte Winkel α zwischen den Symmetrieachsen der beiden Messtaster liegen im Bereich von 30° bis 90°.

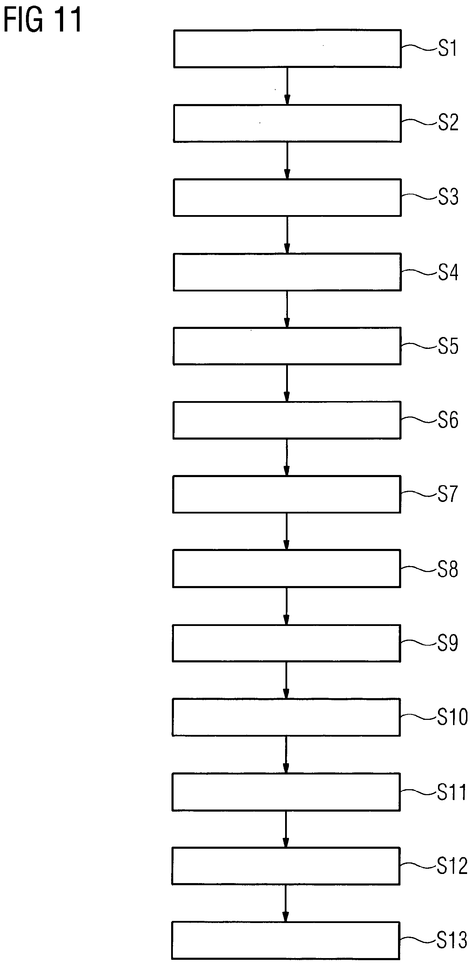

Figur 11 veranschaulicht schließlich die wesentlichen Verfahrensschritte bei der Durchführung eines erfindungsgemäßen Verfahrens anhand eines Flussdiagrammes.

In einem ersten Verfahrensschritt S1 wird zunächst eine erste Ausgangsposition durch Einstellung eines bestimmten Drehwinkels der Werkzeugaufnahme, vorzugsweise 0°, und Einstellen eines bestimmten Drehwinkels der Rundachse, vorzugsweise 0°, eingenommen.

In einem zweiten Verfahrensschritt S2 wird die Werkzeugaufnahme in Richtung der Spindelachse bewegt und ein erster Messwert des ersten Messtasters für eine Position, in der sich der erste Messtaster in Kontakt mit der Kalibrierkugel befindet, erfasst.

In einem dritten Verfahrensschritt S3 wird die Werkzeugaufnahme in Richtung der ersten translatorischen Achse, vorzugsweise orthogonal zu der Spindelachse, bewegt und ein erster Messwert des zweiten Messtasters für eine Position erfasst, in der sich der zweite Messtaster in Kontakt mit der Kalibrierkugel befindet.

In einem vierten Verfahrensschritt S4 wird die Werkzeugaufnahme um 180° um die Spindelachse gedreht und ein zweiter Messwert des zweiten Messtasters erfasst.

In einem fünften Verfahrensschritt S5 wird der Mittelpunkt der Kalibrierkugel auf der ersten translatorischen Achse anhand des ersten Messwertes und des zweiten Messwertes ermittelt und die Werkzeugaufnahme bezüglich der ersten translatorischen Achse auf den Mittelpunkt der Kalibrierkugel positioniert.

In einem sechsten Verfahrensschritt S6 wird die Werkzeugaufnahme um einen bestimmten Winkel, vorzugsweise 90°, um die Spindelachse gedreht und der zweite Messtaster in Richtung der zweiten translatorischen Achse ausgerichtet, wobei in dieser Position ein dritter Messwert des zweiten Messtasters erfasst wird.

In einem siebten Verfahrensschritt S7 wird die Werkzeugaufnahme um 180° um die Spindelachse gedreht und ein vierter Messwert des zweiten Messtasters erfasst.

In einem achten Verfahrensschritt S8 wird der Mittelpunkt der Kalibrierkugel auf der zweiten translatorischen Achse anhand des dritten Messwertes und des vierten Messwertes ermittelt und die Werkzeugaufnahme bezüglich der zweiten translatorischen Achse auf den Mittelpunkt der Kalibrierkugel positioniert. Damit ist die Kalibrierung der Messvorrichtung in Bezug auf die Kalibrierkugel abgeschlossen und die eigentliche Vermessung der Rundachse (siehe nachfolgende Verfahrensschritte) kann beginnen.

In einem neunten Verfahrensschritt S9 wird eine Orientierungstransformation aktiviert.

In einem zehnten Verfahrensschritt S10 wird eine zweite Ausgangsposition eingenommen, in der die Spindelachse durch den Mittelpunkt der Kalibrierkugel verläuft und der zweite Messtaster derart ausgerichtet ist, dass eine Symmetrieachse des zweiten Messtasters in einer durch die erste translatorische Achse und die dritte translatorische Achse aufgespannten Ebene liegt und durch den Mittelpunkt der Kalibrierkugel verläuft.

In einem elften Verfahrensschritt S11 wird die Werkzeugaufnahme um die Rundachse mit aktiver Orientierungstransformation umpositioniert, derart, dass sich die Werkzeugaufnahme ideal stets in gleichem Abstand zum Mittelpunkt der Kalibrierkugel befindet und die Spindelachse ideal stets durch den Mittelpunkt der Kalibrierkugel verläuft, und wenigstens eine Abweichung von der idealen Position und/oder Orientierung durch Erfassen von Messwerten des ersten und/oder des zweiten Messtasters ermittelt.

In einem zwölften Verfahrensschritt S12 wird eine dritte Ausgangsposition eingenommen, in der die Spindelachse durch den Mittelpunkt der Kalibrierkugel verläuft und der zweite Messtaster derart ausgerichtet ist, dass eine Symmetrieachse des zweiten Messtasters in einer durch die zweite translatorische Achse und die dritte translatorische Achse aufgespannten Ebene liegt und durch den Mittelpunkt der Kalibrierkugel verläuft.

In einem dreizehnten Verfahrensschritt S13 werden die Werkzeugaufnahme um die Rundachse mit aktiver Orientierungstransformation umpositioniert, derart, dass sich die Werkzeugaufnahme ideal stets in gleichem Abstand zum Mittelpunkt der Kalibrierkugel befindet und die Spindelachse ideal stets durch den Mittelpunkt der Kalibrierkugel verläuft, und wenigstens eine Abweichung von der idealen Position und/oder Orientierung durch Erfassen von Messwerten des ersten und/oder des zweiten Messtasters ermittelt.

Das erfindungsgemäße Verfahren ermöglicht auf einfache Weise und insbesondere unter Verwendung einer verhältnismäßig einfach aufgebauten Messvorrichtung mit lediglich zwei Messtastern die Ermittlung von Korrekturwerten bei der durch eine numerische Steuerung ausgeführten Orientierungstransformation. Auch eine graphische Darstellung der Messwerte und damit der Genauigkeit der Bewegung der Werkzeugaufnahme ist möglich. Vorteilhaft kann die Ermittlung von Korrekturwerten bezüglich einer Rundachse mittels des geschilderten Verfahrens auch mehrfach wiederholt werden, insbesondere so lange, bis keine weitere Steigerung der Genauigkeit der Bewegung erreicht werden kann. Bei einer Ausführungsform der Erfindung kann die Werkzeugaufnahme 3 bei der Bewegung um den Mittelpunkt der Kalibrierkugel 2 auch gleichzeitig um beide Rundachsen A und B geschwenkt werden, insbesondere um auch bezüglich dieser komplexen Bewegung die korrekte Einstellung der Kinematik der Werkzeugmaschine zu kontrollieren.

Das erfindungsgemäße Verfahren kann selbstverständlich analog auch bei Werkzeugmaschinen mit einer anderen als der im Ausführungsbeispiel gemäß den Figuren 1 und 3 ff gezeigten Kopfkinematik angewandt werden, beispielsweise einer Kinematik, bei der der Werkzeugtisch um wenigstens eine Rundachse schwenkbar gelagert ist (vgl. Figur 2). Weiterhin kann die Erfindung auch bei einer Werkzeugmaschine mit lediglich einer Rundachse oder mit mehr als drei Rundachsen ausgeführt werden. Das Ziel besteht stets darin, die Genauigkeit der von einer Werkzeugmaschine geführten Bewegungen zu erfassen bzw. bei über ein tolerierbares Maß hinausgehenden Abweichungen von einer idealen Bewegungsführung Korrekturwerte bezüglich der Orientierungstransformation zu ermitteln, mit deren Hilfe eine gewünschte Genauigkeit der Bewegungsführung erreicht werden kann.

## Patentansprüche

1. Verfahren zur Vermessung wenigstens einer Rundachse (B) einer Werkzeugmaschine (15),
- wobei die Werkzeugmaschine (15) eine Werkzeugaufnahme (3) umfasst, die über wenigstens eine erste translatorische Achse (x-Achse), eine zweite translatorische Achse (y-Achse) und eine dritte translatorische Achse (z-Achse) relativ zu einem Werkstück im Raum positionierbar und über wenigstens die eine Rundachse (B) relativ zu dem Werkstück orientierbar ist,
- wobei die Werkzeugaufnahme (3) um eine Spindelachse (z-Achse) rotierbar und hinsichtlich eines Drehwinkels einstellbar ist,
- wobei eine Messvorrichtung (4) mit einem in Richtung der Spindelachse (z-Achse) ausgerichteten ersten Messtaster (5) mit flächig ausgebildetem Tastaufnehmer (6) und einem unter einem bestimmten Winkel, vorzugsweise orthogonal, zu der Spindelachse (z-Achse) ausgerichteten zweiten Messtaster (7) mit flächig ausgebildetem Tastaufnehmer (8) in die Werkzeugaufnahme (3) eingespannt ist und
- wobei eine Kalibrierkugel (2) in eine Werkstückaufnahme (1) der Werkzeugmaschine (15) eingespannt ist, mit folgenden Verfahrensschritten:
- Einnehmen einer ersten Ausgangsposition durch Einstellung eines bestimmten Drehwinkels der Werkzeugaufnahme (3), vorzugsweise 0°, und Einstellen eines bestimmten Drehwinkels der Rundachse (B), vorzugsweise 0°,
- Bewegen der Werkzeugaufnahme (3) in Richtung der Spindelachse (z-Achse) und Erfassen eines ersten Messwertes des ersten Messtasters (5) für eine Position, in der sich der erste Messtaster (5) in Kontakt mit der Kalibrierkugel (2) befindet,
- Bewegen der Werkzeugaufnahme (3) in Richtung der ersten translatorischen Achse (x-Achse), vorzugsweise orthogonal zu der Spindelachse (z-Achse), und Erfassen eines ersten Messwertes des zweiten Messtasters (7) für eine Position, in der sich der zweite Messtaster (7) in Kontakt mit der Kalibrierkugel (2) befindet,
- Drehen der Werkzeugaufnahme (3) um 180° um die Spindelachse (z-Achse) und Erfassen eines zweiten Messwertes des zweiten Messtasters (7),
- Ermitteln des Mittelpunktes (XM) der Kalibrierkugel auf der ersten translatorischen Achse (x-Achse) anhand des ersten Messwertes und des zweiten Messwertes und Positionieren der Werkzeugaufnahme (3) bezüglich der ersten translatorischen Achse (x-Achse) auf den Mittelpunkt (XM) der Kalibrierkugel (2),
- Drehen der Werkzeugaufnahme (3) um einen bestimmten Winkel, vorzugsweise 90°, um die Spindelachse (z-Achse) und Ausrichten des zweiten Messtasters (7) in Richtung der zweiten translatorischen Achse (y-Achse), wobei in dieser Position ein dritter Messwert des zweiten Messtasters (7) erfasst wird,
- Drehen der Werkzeugaufnahme (3) um 180° um die Spindelachse (z-Achse) und Erfassen eines vierten Messwertes des zweiten Messtasters (7),
- Ermitteln des Mittelpunktes (YM) der Kalibrierkugel auf der zweiten translatorischen Achse (y-Achse) anhand des dritten Messwertes und des vierten Messwertes und Positionieren der Werkzeugaufnahme bezüglich der zweiten translatorischen Achse (y-Achse) auf den Mittelpunkt (YM) der Kalibrierkugel,
- Aktivieren einer Orientierungstransformation,
- Einnehmen einer zweiten Ausgangsposition, in der die Spindelachse (z-Achse) durch den Mittelpunkt (M) der Kalibrierkugel (2) verläuft und der zweite Messtaster (7) derart ausgerichtet ist, dass eine Symmetrieachse (S) des zweiten Messtasters (7) in einer durch die erste translatorische Achse (x-Achse) und die dritte translatorische Achse (z-Achse) aufgespannten Ebene liegt und durch den Mittelpunkt (M) der Kalibrierkugel (2) verläuft,
- Umpositionieren der Werkzeugaufnahme (3) um die Rundachse (B) mit aktiver Orientierungstransformation derart, dass sich die Werkzeugaufnahme (3) ideal stets in gleichem Abstand zum Mittelpunkt (M) der Kalibrierkugel (2) befindet und die Spindelachse (z-Achse) ideal stets durch den Mittelpunkt (M) der Kalibrierkugel (2) verläuft, und ermitteln wenigstens einer Abweichung von der idealen Position und/oder Orientierung durch Erfassen von Messwerten des ersten und/oder des zweiten Messtasters (5 bzw. 7),
- Einnehmen einer dritten Ausgangsposition, in der die Spindelachse (z-Achse) durch den Mittelpunkt (M) der Kalibrierkugel (2) verläuft und der zweite Messtaster (7) derart ausgerichtet ist, dass eine Symmetrieachse (S) des zweiten Messtasters (7) in einer durch die zweite translatorische Achse (y-Achse) und die dritte translatorische Achse (z-Achse) aufgespannten Ebene liegt und durch den Mittelpunkt (M) der Kalibrierkugel (2) verläuft,
- Umpositionieren der Werkzeugaufnahme (3) um die Rundachse (B) mit aktiver Orientierungstransformation derart, dass sich die Werkzeugaufnahme (3) ideal stets in gleichem Abstand zum Mittelpunkt (M) der Kalibrierkugel (2) befindet und die Spindelachse (z-Achse) ideal stets durch den Mittelpunkt (M) der Kalibrierkugel (2) verläuft, und ermitteln wenigstens einer Abweichung von der idealen Position und/oder Orientierung durch Erfassen von Messwerten des ersten und/oder des zweiten Messtasters (5 bzw. 7).

2. Verfahren nach Anspruch 1, wobei eine Vielzahl an Abweichungen während der Drehung der Werkzeugaufnahme (3) um die Rundachse (B) für eine Vielzahl an Winkeln ermittelt wird und wobei Korrekturwerte bzgl. der Orientierungstransformation unter Einbeziehung der ermittelten Abweichungen ermittelt werden.

3. Verfahren nach Anspruch 1 oder 2, wobei nach dem Positionieren der Werkzeugaufnahme (3) bezüglich der ersten translatorischen Achse (x-Achse) und/oder der zweiten translatorischen Achse (y-Achse) wenigstens eine Kontrollmessung durchgeführt und in Abhängigkeit des Ergebnisses der Kontrollmessung die Werkzeugaufnahme (3) nachpositioniert wird.

4. Verfahren nach einem der vorherigen Ansprüche, wobei nach dem Positionieren der Werkzeugaufnahme (3) bezüglich der ersten translatorischen Achse (x-Achse) und der zweiten translatorischen Achse (y-Achse) die Werkzeugaufnahme (3) um wenigstens 360° um die Spindelachse (z-Achse) gedreht und ein Rundlauffehler ermittelt wird.

5. Verfahren nach Anspruch 4, wobei ein ermittelter Rundlauffehler mittels einer Steuerung (10) der Werkzeugmaschine (15) ausgeglichen wird.

6. Verfahren nach einem der vorherigen Ansprüche, wobei während der Drehung der Werkzeugaufnahme (3) um die Rundachse die von dem ersten und/oder dem zweiten Messtaster (5 bzw. 7) erfassten Messwerte automatisch überwacht werden, insbesondere auf Einhaltung eines bestimmten Toleranzbandes, und wobei bei Überschreiten eines Maximalwertes die Drehung der Werkzeugaufnahme (3) gestoppt wird.

7. Verfahren nach Anspruch 6, wobei die Grenzen des Toleranzbandes und/oder der Maximalwert einstellbar sind.

8. Verfahren nach einem der vorherigen Ansprüche, wobei in einem Messprogramm zur Durchführung des Verfahrens eine Maschinen-Kinematik voreinstellbar ist.

9. Messsystem zur Verbindung mit einer Werkzeugmaschine (15) und zur Durchführung eines Verfahrens zur Vermessung wenigstens einer Rundachse (B) nach einem der Ansprüche 1 bis 8, umfassend eine in die Werkzeugaufnahme (3) der Werkzeugmaschine (15) einspannbare Messvorrichtung (4) mit einem in Richtung der Spindelachse (z-Achse) ausrichtbaren ersten Messtaster (5) mit flächig ausgebildetem Tastaufnehmer (6) und einem unter einem bestimmten Winkel, vorzugsweise orthogonal, zu der Spindelachse (z-Achse) ausrichtbaren zweiten Messtaster (7) mit flächig ausgebildetem Tastaufnehmer (8), sowie ferner umfassend eine Messelektronik (13).

10. Steuerung (10) für eine Werkzeugmaschine (15) zur Durchführung eines Verfahrens zur Vermessung wenigstens einer Rundachse (B) nach einem der Ansprüche 1 bis 8.

11. Werkzeugmaschine (15) mit einer Steuerung (10) nach Anspruch 10.

## Claims

1. Method for measuring at least one axis of rotation (B) of a machine tool (15),
- wherein the machine tool (15) comprises a tool holder (3) which can be positioned in space relative to a workpiece via at least one first translational axis (x-axis), a second translational axis (y-axis) and a third translational axis (z-axis), and can be oriented relative to the workpiece via the at least one axis of rotation (B),
- wherein the tool holder (3) can be rotated about a spindle axis (z-axis) and can be adjusted in respect of an angle of rotation,
- wherein a measuring device (4) having a first probe (5), which is aligned in the direction of the spindle axis (z-axis) and has a tactile sensor (6) embodied as flat, and a second probe (7), which is aligned at a certain angle, preferably orthogonally, to the spindle axis (z-axis) and has a tactile sensor (8) embodied as flat, is clamped into the tool holder (3) and
- wherein a calibration ball (2) is clamped into a workpiece holder (1) of the machine tool (15),
having the following method steps:
- adopting a first starting position by setting a certain angle of rotation of the tool holder (3), preferably 0°, and setting a certain angle of rotation of the axis of rotation (B), preferably 0°,
- moving the tool holder (3) in the direction of the spindle axis (z-axis) and detecting a first measured value of the first probe (5) for a position in which the first probe (5) is in contact with the calibration ball (2),
- moving the tool holder (3) in the direction of the first translational axis (x-axis), preferably orthogonally to the spindle axis (z-axis), and detecting a first measured value of the second probe (7) for a position in which the second probe (7) is in contact with the calibration ball (2),
- rotating the tool holder (3) by 180° about the spindle axis (z-axis) and detecting a second measured value of the second probe (7),
- determining the centre point (XM) of the calibration ball on the first translational axis (x-axis) based on the first measured value and the second measured value and positioning the tool holder (3) relative to the first translational axis (x-axis) to the centre point (XM) of the calibration ball (2),
- rotating the tool holder (3) by a certain angle, preferably 90°, about the spindle axis (z-axis) and aligning the second probe (7) in the direction of the second translational axis (y-axis), wherein a third measured value of the second probe (7) is detected in this position,
- rotating the tool holder (3) by 180° about the spindle axis (z-axis) and detecting a fourth measured value of the second probe (7),
- determining the centre point (YM) of the calibration ball on the second translational axis (y-axis) based on the third measured value and the fourth measured value and positioning the tool holder relative to the second translational axis (y-axis) to the centre point (YM) of the calibration ball,
- activating an orientation transformation,
- adopting a second starting position, in which the spindle axis (z-axis) runs through the centre point (M) of the calibration ball (2) and the second probe (7) is aligned such that an axis of symmetry (S) of the second probe (7) lies in a plane spanned by the first translational axis (x-axis) and the third translational axis (z-axis) and runs through the centre point (M) of the calibration ball (2),
- repositioning the tool holder (3) about the axis of rotation (B) with active orientation transformation such that the tool holder (3) ideally is always located at the same distance from the centre point (M) of the calibration ball (2) and the spindle axis (z-axis) ideally always runs through the centre point (M) of the calibration ball (2), and determining at least one deviation from the ideal position and/or orientation by detecting measured values of the first and/or second probe (5 and 7 respectively),
- adopting a third starting position in which the spindle axis (z-axis) runs through the centre point (M) of the calibration ball (2) and the second probe (7) is aligned such that an axis of symmetry (S) of the second probe (7) lies in a plane spanned by the second translational axis (y-axis) and the third translational axis (z-axis) and runs through the centre point (M) of the calibration ball (2),
- repositioning the tool holder (3) about the axis of rotation (B) with active orientation transformation such that the tool holder (3) ideally is always located at the same distance from the centre point (M) of the calibration ball (2) and the spindle axis (z-axis) ideally always runs through the centre point (M) of the calibration ball (2), and determining at least one deviation from the ideal position and/or orientation by detecting measured values of the first and/or second probe (5 and 7 respectively).

2. Method according to claim 1, wherein a plurality of deviations during the rotation of the tool holder (3) about the axis of rotation (B) are determined for a plurality of angles, and wherein correction values in respect of the orientation transformation are determined, together with the determined deviations.

3. Method according to claim 1 or 2, wherein after positioning the tool holder (3) in respect of the first translational axis (x-axis) and/or the second translational axis (y-axis) at least one check measurement is performed, and the tool holder (3) is repositioned as a function of the result of the check measurement.

4. Method according to one of the preceding claims, wherein after positioning the tool holder (3) in respect of the first translational axis (x-axis) and the second translational axis (y-axis) the tool holder (3) is rotated by at least 360° about the spindle axis (z-axis) and a radial eccentricity is determined.

5. Method according to claim 4, wherein a determined radial eccentricity is compensated for by means of a controller (10) of the machine tool (15).

6. Method according to one of the preceding claims, wherein during rotation of the tool holder (3) about the axis of rotation the measured values captured by the first and/or second probe (5 and 7 respectively) are automatically monitored, in particular for conformity to a certain tolerance band, and wherein when a maximum value is exceeded the rotation of the tool holder (3) is stopped.

7. Method according to claim 6, wherein the limits of the tolerance band and/or the maximum value can be set.

8. Method according to one of the preceding claims, wherein machining kinematics can be preset in a measurement program for performing the method.

9. Measurement system for connection to a machine tool (15) and for performing a method for measuring at least one axis of rotation (B) according to one of claims 1 to 8, comprising a measuring device (4) which can be clamped into the tool holder (3) of the machine tool (15) and which has a first probe (5) which can be aligned in the direction of the spindle axis (z-axis) and has a tactile sensor (6) embodied as flat, and a second probe (7) which is aligned at a certain angle, preferably orthogonally, to the spindle axis (z-axis) and has a tactile sensor (8) embodied as flat, and furthermore comprising measuring electronics (13).

10. Controller (10) for a machine tool (15) for performing a method for measuring at least one axis of rotation (B) according to one of claims 1 to 8.

11. Machine tool (15) having a controller (10) according to claim 10.

## Revendications

1. Procédé de mesure d'au moins un axe ( B ) circulaire d'une machine-outil ( 15 ),
- dans lequel la machine-outil ( 15 ) comprend un logement ( 3 ) d'outil, qui peut être mis en position dans l'espace, par rapport à une pièce, par au moins un premier axe de translation ( axe x ), un deuxième axe de translation ( axe y ) et un troisième axe de translation ( axe z ) et qui peut être orienté par rapport à la pièce, par au moins l'axe ( B ) circulaire,
- dans lequel le logement ( 3 ) d'outil peut tourner autour d'un axe de broche ( axe z ) et être réglable en ce qui concerne un angle de rotation,
- dans lequel un dispositif ( 4 ) de mesure, ayant un premier palpeur ( 5 ) de mesure, dirigé dans la direction de l'axe de la broche ( axe z ), à capteur ( 6 ) constitué de manière plate et faisant un certain angle avec l'axe de la broche ( axe z ), , de préférence en lui étant orthogonal, et un deuxième palpeur ( 7 ) de mesure à capteur ( 8 ) constitué de manière plate est bloqué dans le logement ( 3 ) d'outil et
- dans lequel une bille ( 2 ) d'étalonnage est bloquée dans un logement ( 1 ) d'outil de la machine-outil ( 15 ), comprenant les stades de procédé suivants :
- prise d'une première position de départ par réglage d'un angle de rotation déterminé du logement ( 3 ) d'outil, de préférence de 0°, et réglage d'un angle de rotation déterminé de l'axe ( B ) circulaire, de préférence de 0°,
- déplacement du logement ( 3 ) d'outil en direction de l'axe de la broche ( axe z ) et relevé d'une première valeur de mesure du premier palpeur ( 5 ) de mesure pour une position dans laquelle le premier palpeur ( 5 ) de mesure se trouve en contact avec la bille ( 2 ) d'étalonnage,
- déplacement du logement ( 3 ) d'outil dans la direction du premier axe de translation ( axe x ), de préférence orthogonalement à l'axe de la broche ( axe z ), et relevé d'une première valeur de mesure du deuxième palpeur ( 7 ) de mesure pour une position dans laquelle le deuxième palpeur ( 7 ) de mesure se trouve en contact avec la bille ( 2 ) d'étalonnage,
- rotation du logement ( 3 ) d'outil de 180° autour de l'axe de la broche ( axe z ) et relevé d'une deuxième valeur de mesure du deuxième palpeur ( 7 ) de mesure,
- détermination du centre ( XM ) de la bille d'étalonnage sur le premier axe de translation ( axe x ) à l'aide de la première valeur de mesure et de la deuxième valeur de mesure et mise en position du logement ( 3 ) d'outil par rapport au premier axe de translation ( axe x ) sur le centre ( XM ) de la bille ( 2 ) d'étalonnage,
- rotation du logement ( 3 ) d'outil d'un angle déterminé, de préférence de 90°, autour de l'axe de la broche ( axe z ) et orientation du deuxième palpeur ( 7 ) de mesure dans la direction du deuxième axe de translation ( axe y ), une troisième valeur de mesure du deuxième palpeur ( 7 ) de mesure étant relevée en cette position,
- rotation du logement ( 3 ) d'outil de 180° autour de l'axe de la broche ( axe z ) et relevé d'une quatrième valeur de mesure du deuxième palpeur ( 7 ) de mesure,
- détermination du centre ( YM ) de la bille d'étalonnage sur le deuxième axe de translation ( axe y ) à l'aide de la troisième valeur de mesure et de la quatrième valeur de mesure et mise en position du logement d'outil par rapport au deuxième axe de translation ( axe y ) sur le centre ( YM ) de la bille d'étalonnage,
- activation d'une transformation d'orientation,
- prise d'une deuxième position de départ, dans laquelle l'axe de la broche ( axe z ) passe par le centre ( M ) de la bille ( 2 ) d'étalonnage et le deuxième palpeur ( 7 ) de mesure est orienté de manière à ce qu'un axe ( S ) de symétrie du deuxième palpeur ( 7 ) de mesure se trouve dans un plan, passant par le premier axe de translation ( axe x ) et par le troisième axe de translation ( axe z ), et passe par le centre ( M ) de la bille ( 2 ) d'étalonnage,
- changement de position du logement ( 3 ) d'outil autour de l'axe ( B ) circulaire par une transformation d'orientation active de manière à ce que le logement ( 3 ) d'outil se trouve idéalement toujours à la même distance du centre ( M ) de la bille ( 2 ) d'étalonnage et de manière à ce que l'axe de la broche ( axe z ) passe toujours idéalement par le centre ( M ) de la bille ( 2 ) d'étalonnage et détermination d'au moins un écart à la position idéale et/ou à l'orientation par relevé de valeurs de mesure du premier et/ou du deuxième palpeurs ( 5 ou 7 ) de mesure,
- prise d'une troisième position de départ dans laquelle l'axe de la broche ( axe z ) passe par le centre ( M ) de la bille ( 2 ) d'étalonnage et le deuxième palpeur ( 7 ) de mesure est conçu de manière à ce qu'un axe ( S ) du deuxième palpeur ( 7 ) de mesure se trouve dans un plan, passant par le deuxième axe de translation ( axe y ) et par le troisième axe de translation ( axe z ), et passe par le centre ( M ) de la bille ( 2 ) d'étalonnage,
- changement de position du logement ( 3 ) d'outil autour de l'axe ( B ) circulaire par une transformation d'orientation active, de manière à ce que le logement ( 3 ) d'outil se trouve idéalement toujours à la même distance du centre ( M ) de la bille ( 2 ) d'étalonnage et de manière à ce que l'axe de la broche ( axe z ) passe idéalement toujours par le centre ( M ) de la bille ( 2 ) d'étalonnage et détermination d'au moins un écart à la position idéale et/ou à l'orientation en relevant des valeurs de mesure du premier et/ou du deuxième palpeurs ( 5 ou 7 ) de mesure.

2. Procédé suivant la revendication 1, dans lequel on détermine une pluralité d'écarts pendant la rotation du logement ( 3 ) d'outil autour de l'axe ( B ) circulaire pour une pluralité d'angles et dans lequel on détermine des valeurs de correction ou de la transformation d'orientation en intégrant les écarts déterminés.

3. Procédé suivant la revendication 1 ou 2, dans lequel, après la mise en position du logement ( 3 ) d'outil par rapport au premier axe de translation ( axe x ) et/ou par rapport au deuxième axe de translation ( axe y ), on effectue au moins une mesure de contrôle et, en fonction du résultat de la mesure de contrôle, on remet en position le logement ( 3 ) d'outils.

4. Procédé suivant l'une des revendications précédentes, dans lequel, après la mise en position du logement ( 3 ) d'outils par rapport au premier axe de translation ( axe x ) et par rapport au deuxième axe de translation ( axe y ), on fait tourner le logement ( 3 ) d'outil d'au moins 360° autour de l'axe de la broche ( axe z ) et on détermine un défaut de circularité.

5. Procédé suivant la revendication 4, dans lequel on compense un défaut de circularité qui est déterminé au moyen d'une commande ( 10 ) de la machine-outil ( 15 ).

6. Procédé suivant l'une des revendications précédentes, dans lequel, pendant la rotation du logement ( 3 ) d'outil autour de l'axe circulaire, on contrôle automatiquement les valeurs de mesure relevées par le premier et/ou par le deuxième palpeur ( 5 ou 7 ) de mesure, notamment en respectant une marge de tolérance déterminée et, si une valeur maximum est dépassée, on arrête la rotation du logement ( 3 ) d'outils.

7. Procédé suivant la revendication 6, dans lequel les limites de la marge de tolérance et/ou de la valeur maximum sont réglables.

8. Procédé suivant l'une des revendications précédentes, dans lequel on règle au préalable une cinématique de machine dans un programme de mesure pour effectuer le procédé.

9. Système de mesure à relier à une machine-outil ( 15 ) et pour effectuer un procédé de mesure d'au moins un axe ( B ) circulaire suivant l'une des revendications 1 à 8, comprenant un dispositif ( 4 ) de mesure pouvant être bloqué dans le logement ( 3 ) d'outil de la machine-outil ( 15 ) et ayant un premier palpeur ( 5 ) de mesure, pouvant être orienté dans la direction de l'axe de la broche ( axe z ) et ayant un capteur ( 6 ) constitué de manière plate, et un deuxième palpeur ( 7 ) de mesure, pouvant être orienté en faisant un angle déterminé avec l'axe de la broche ( axe z ), en lui étant de préférence orthogonal, et ayant un capteur ( 8 ) constitué de manière plate, ainsi que comprenant en outre une électronique ( 13 ) de mesure.

10. Commande ( 10 ) d'une machine-outil ( 15 ) pour effectuer un procédé de mesure d'au moins un axe ( B ) circulaire suivant l'une des revendications 1 à 8.

11. Machine-outil ( 15 ) ayant une commande ( 10 ) suivant la revendication 10.
